## Europäisches Patentamt
## European Patent Office
## Office européen des brevets

(19)

(11) Veröffentlichungsnummer: **0 259 556 B1**

(12)

# EUROPÄISCHE PATENTSCHRIFT

(45) Veröffentlichungstag der Patentschrift: 04.09.91

(51) Int. Cl.⁵: **A01D 78/10**

(21) Anmeldenummer: 87109563.4

(22) Anmeldetag: 03.07.87

(54) **Heuwerbungsmachine.**

(30) Priorität: 11.09.86 DE 8624359 U

(43) Veröffentlichungstag der Anmeldung:
16.03.88 Patentblatt 88/11

(45) Bekanntmachung des Hinweises auf die
Patenterteilung:
04.09.91 Patentblatt 91/36

(84) Benannte Vertragsstaaten:
AT DE FR

(56) Entgegenhaltungen:
CH-A- 414 239
CH-A- 474 207
FR-A- 1 574 280
FR-A- 2 246 221

(73) Patentinhaber: Fella-Werke GmbH
Fellastrasse 2
W-8501 Feucht(DE)

(72) Erfinder: Kuntze, Karl-Heinz
Innere-Weissensee-Strasse 31
W-8501 Feucht(DE)

(74) Vertreter: Matschkur, Peter Dipl.-Phys.
Czowalla - Matschkur Patentanwälte Dr. Kurt-
Schumacher-Strasse 23
W-8500 Nürnberg 11(DE)

## Beschreibung

Die Erfindung richtet sich auf eine Heuwerbungsmaschine insbesondere zum Schwadlegen, die eine zentrale zum Boden gerichtete Drehachse für die Arbeitswerkzeuge aufweist und deren Maschinenrahmen durch ein mit Laufrädern versehenes Fahrgestell auf dem Boden abgestützt ist.

Sowohl in der FR-A-1 574 280 als auch in der CH-A-474 207 sind Heuerntemaschinen offenbart, welche unter jedem Rechenrad eine zentrale, zum Boden gerichtete Drehachse sowie pro Drehachse ein mit Laufrädern versehenes Fahrgestell mit einer zentralen Muffe aufweisen. In Übereinstimmung mit der Erfindung ist bei der FR-A-1 574 280 die zentrale Muffe von unten auf die Drehachse aufgeschoben und aufgrund einer Feder drehfest mit der Drehachse verbunden. Die Verbindung wird mit einer Schraube gesichert, ist jedoch lösbar. Eine ganz ähnliche Anordnung offenbart die CH-A-474 207, bei der das Fahrwerk ebenfalls eine Muffe aufweist, welche von unten auf einen konzentrisch zur Rotationsachse der Arbeitswerkzeuge angeordneten Lagerhals aufgeschoben und mittels einer nicht näher bezeichneten Feder drehfest mit diesem verbunden ist. Mit einer lösbaren Ringmutter wird die Muffe am Lagerhals in Axialrichtung gesichert.

Der wesentliche Unterschied des Erfindungsgegenstandes zu den oben genannten Vorveröffentlichungen besteht darin, daß erfindungsgemäß an dem unterem Ende der Muffe eine Platte befestigt ist, über die die Muffe mit der Einrichtung zur Höhenverstellung fest, aber lösbar verbunden ist.

Heuwerbungs maschinen dieser gattung können beispielsweise auch über eine Zugdeichsel an eine Zugöse des Schleppers angehängt werden. Für diese Ausführung eignet sich bevorzugt ein zweirädriges Fahrwerk. Die bewegliche Verbindung zum Schlepper gewährt ein hohes Maß an Beweglichkeit, um die gewünschte zuverlässige Bodenführung der Maschine auch im unebenen Gelände sicherzustellen. Alternativ erfolgt der Anbau einer solchen Heuwerbungsmaschine über das Dreipunktsystem des Schleppers und zwar an der Heckseite wie an der Frontseite. Diese Betriebsart ist allerdings mit einer gewissen Einbuße der Anpassungsfähigkeit der Maschine verbunden. Besonders bei unebenem Gelände wird die Bodenhaftung beeinträchtigt und wird gelegentlich die Sauberkeit der Arbeit als unbefriedigend angesehen. Um diesem Mangel abzuhelfen, hat man das Fahrwerk um ein drittes Rad ergänzt und den starren Oberlenker des Dreipunktsystems fortgelassen. In diesem Fall läuft die Maschine unabhängig von der Dreipunktaufhängung auf eigenen Führungsrädern und kann sich infolgedessen Bodenunebenheiten ohne weiteres anpassen. Gewisse Schwierigkeiten bereitet es allerdings, das dritte Rad innerhalb des Umlaufkreises der Arbeitswerkzeuge unterzubringen. Dies ist aber erforderlich, um zu vermeiden, daß sich das Erntegut, wenn es von dem Zusatzrad überfahren wird, um dieses wickelt. Es ist auch bereits eine konstruktiv aufwendige Parallelführung der drei Räder eines Fahrgestells bekanntgeworden. In diesem Fall kann die Maschine sowohl im Anhängebetrieb, als auch mit Dreipunktanbau betrieben werden.

Ungeachtet der unbestreitbaren Vorzüge des Dreipunktanbaus solcher Heuwerbungsmaschinen hat sich auch die gezogene Ausführungsform weiterhin auf dem Markt behauptet, in erster Linie wohl wegen des einfacheren Ankoppelns der Zugdeichsel an den Schlepper. Der Erwerber einer derartigen Maschine hat mithin die Wahl zwischen zwei verschiedenen Betriebsweisen. Diesem Gesichtspunkt tragen zahlreiche Hersteller schon durch die leichte Auswechselbarkeit des Dreipunktbockes des Maschinenrahmens gegen eine Zugdeichsel Rechnung. Diese Maßnahme verlangt im allgemeinen aber auch eine Änderung des Fahrgestells zum Austausch einer zweirädrigen Ausführung gegen eine solche mit drei Laufrädern. Diese Ausgestaltung erschwert die Fertigung und verlangt zugleich eine größere Lagerhaltung, was beides unerwünscht ist. Hieraus ergibt sich die Forderung nach einer Bauart, die ein rasches Auswechseln des Fahrgestells ermöglicht, um, entweder in der Fertigung oder beim Händler oder aber beim Benutzer, das Fahrgestell der Maschine ohne großen Aufwand deren jeweils gewünschter Betriebsart anzupassen. Dieser Forderung trägt eine Heuwerbungsmaschine der eingangs bezeichneten Art dadurch Rechnung, daß das Fahrgestell eine Zentrale Muffe aufweist, die von unten auf die Drehachse aufgeschoben und axial sowie drehfest mit dieser verbunden ist. Bei einer derartigen Heuwerbungsmaschine kann die Entscheidung, ob die Maschine mit Zweirad-Fahrgestell oder in dreirädriger Ausführung gebaut werden soll, bis zur Endmontage aufgeschoben werden. Das jeweils gewünschte Fahrgestell kann ausgewählt und ohne weiteres der Maschine zugeordnet werden. Andererseits kann der Landmaschinenhändler zu ein und derselben Heuwerbungsmaschine unterschiedliche Fahrgestelle auf Lager halten und diese mit dem jeweils vom Käufer gewünschten Fahrgestell ausstatten. Diese Maßnahme gewährleistet eine hohe Anpassungsfähigkeit an die jeweiligen Kundenwünsche.

Konstruktiv läßt sich der Grundgedanke der Erfindung vorteilhaft dadurch verwirklichen, daß die Muffe mit einer innerhalb der Drehachse angeordneten Einrichtung zur Höhenverstellung des Fahrgestells verbunden ist. Dadurch paßt sich jedes gewünschte Fahrgestell ohne weiteres den vorhandenen Gegebenheiten des Maschinenrahmens an.

In weiterer Ausgestaltung ist zwischen der Muffe und der Drehachse eine Paßfeder als Drehsicherung angeordnet. Eine andere Alternative besteht darin, die Muffe und die Drehachse durch eine entsprechende Profilierung undrehbar miteinander zu verbinden. Welcher Ausführungsform der Vorzug gegeben wird, richtet sich ganz nach den Umständen des Einzelfalls.

Schließlich sieht die Erfindung vor, daß die Gleitbahn zwischen der Muffe und der Drehachse durch einen Faltenbalg abgedeckt ist. Dadurch erweist sich eine derartige Maschine auch rauhen Betriebsbedingungen gegenüber als besonders anpassungsfähig, da der Faltenbalg Verschmutzungen, die die Lebensdauer der Maschine beeinträchtigen könnten, vermeidet.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:

Fig. 1     eine schematische Darstellung einer dem Schwadlegen dienenden Heuwerbungsmaschine in Frontanbau an einem Schlepper;

Fig. 2     die Seitenansicht einer entsprechenden Maschine und

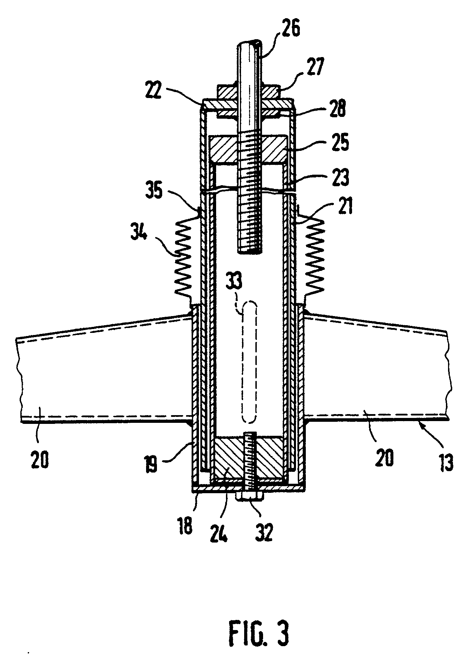

Fig. 3     ein Detail in vergrößerter Darstellung.

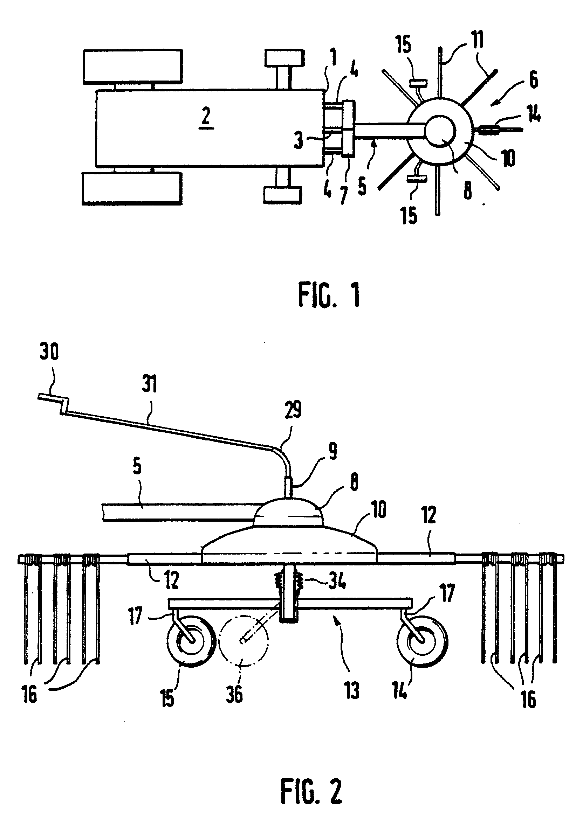

An der Frontseite 1 des Schleppers 2 ist über ein aus dem Oberlenker 3 und den beiden Unterlenkern 4 bestehendes Dreipunktsystem der Maschinenrahmen 5 einer allgemein mit 6 bezeichneten Heuwerbungsmaschine über den Dreipunktbock 7 angebaut. Der Maschinenrahmen 5 trägt ein Getriebegehäuse 8 und eine Drehachse 9. Um diese rotiert eine glockenförmige Trommel 10, die die rechenförmigen Arbeitswerkzeuge lagernde rohrartige Führungen 12 aufweist, die durch eine nicht im einzelnen beschriebene Steuerung geführt werden. Über die Drehachse 9 ist die Maschine auf einem Fahrgestell 13 abgestützt, das bei der in der Fig. 1 wiedergegebenen Ausführungsform drei Laufräder aufweist, nämlich das vordere einzelne Laufrad 14 und die beiden hinteren Laufräder 15. Diese Laufräder 14 u. 15 sind innerhalb des von den Zinken 16 beschriebenen Arbeitskreises angeordnet. Sie sind um eine vertikale Achse 17 schwenkbar gelagert oder aber bei gezogener Maschine starr angeordnet, wie in Fig. 2 anhand des einen von dann zwei vorhandenen Laufrädern 36 angedeutet ist.

Das Fahrgestell 13 weist eine am unteren Ende durch eine Platte 18 verschlossene Muffe 19 auf. An dieser sind die die Laufräder 14,15 tragenden Arme 20 befestigt. Die Muffe 19 ist von unten her auf das untere Ende einer hohlen Drehachse 21 aufgeschoben, deren oberes Ende durch eine Platte 22 verschlossen ist. Innerhalb der Drehachse 21 ist ein Führungsrohr 23 angebracht, dessen unteres Ende durch ein Gewindestück 24 und dessen oberes Ende mit einer Mutter 25 verschlossen ist. Diese Mutter wird von einer Stellspindel 26 durchsetzt, auf welcher ein oberer Anlaufring 27 und ein unterer Anlaufring 28 oberhalb bzw. unterhalb der Platte 22 der Drehachse 21 befestigt sind. Die Spindel 26 steht in im einzelnen nicht wiedergegebener Weise über ein Kardangelenk 29 mit der mit einer Kurbel 30 versehenen Kurbelstange 31 in Verbindung. Durch Betätigung der Kurbelstange 31 wird die Spindel 26 gedreht, die wiederum über die Mutter 25 das Führungsrohr 23 innerhalb der Drehachse 21 auf-oder abbewegt. Mit dem Führungsrohr 23 ist die Muffe 19 über eine Schraube 32 fest verbunden, die ihrerseits in das Gewindestück 24 eingeschraubt ist. Der Drehsicherung zwischen der Muffe 19 und der Drehachse 21 dient bei der in der Zeichnung wiedergegebenen Ausführungsform eine Paßfeder 33.

Zum Auswechseln des Fahrgestells 13 der Maschine 6 braucht bei der wiedergegebenen Ausführungsform lediglich die Schraube 32 gelöst zu werden. Danach läßt sich die Muffe 19 mit den Fahrgestellarmen 20 nach unten abziehen und ggf. durch ein anderes Fahrgestell ersetzen, zu dessen Befestigung es wieder lediglich des Eindrehens der Schraube 32 in das Gewindestück 24 des Führungsrohrs 23 bedarf. Am oberen Ende der Muffe 19 ist ein Faltenbalg 34 befestigt, dessen anderes Ende 35 an der Drehachse angreift.

**Patentansprüche**

1. Heuwerbungsmaschine, insb. zum Schwadlegen, die eine zentrale, zum Boden gerichtete Drehachse (21) für die Arbeitswerkzeuge (16) aufweist und deren Maschinenrahmen (5) durch ein mit Laufrädern (15) versehenes Fahrgestell (13) mit einer innerhalb der Drehachse (21) angeordneten Einrichtung zur Höhenverstellung (23 - 26) des Maschinenrahmens (5) auf dem Boden geführt ist, wobei das Fahrgestell (13) eine zentrale Muffe (19) aufweist, welche von unten auf die Drehachse (21) aufgeschoben und drehfest, aber lösbar auf dieser angeordnet ist, dadurch gekennzeichnet, daß an dem unterem Ende der Muffe (19) eine Platte (18) befestigt ist, über die die Muffe (19) mit der Einrichtung zur Höhenverstellung (23 - 26) fest, aber lösbar verbunden ist.

2. Heuwerbungsmaschine nach Anspruch 1, dadurch gekennzeichnet, daß die Muffe (19) an ihrem unteren Ende durch eine Platte (18) verschlossen ist, die fest, aber lösbar, mit der Höhenverstelleinrichtung (23-26) verschraubt ist.

3. Heuwerbungsmaschine nach Anspruch 1 oder 2, dadurch gekennzeichnet, daß zwischen der Muffe (19) und der Drehachse (21) eine Paßfeder (33) als Drehsicherung angeordnet ist.

4. Heuwerbungsmaschine nach Anspruch 1 oder 2, dadurch gekennzeichnet, daß die Muffe (19) und die Drehachse (21) durch eine Profilverbindung drehsicher verbunden sind.

5. Heuwerbungsmaschine nach einem der Ansprüche 1 bis 4, dadurch gekennzeichnet, daß die Gleitbahn zwischen der Muffe (19) und der Drehachse (21) durch einen Faltenbalg (34) abgedeckt ist.

## Claims

1. Hay-making machine, in particular for windrowing, which has a central rotary shaft (21) oriented towards the ground for the working tools (16), and whose machine frame (5) is guided on the ground by a bogie (13) provided with wheels (15) and having a device (23 - 26) mounted inside the rotary shaft (21) for adjusting the height of the machine frame (5), the bogie (13) having a central bushing (19), which is pushed on to the rotary shaft (21) from below and is mounted thereon in a non-rotatable but detachable manner, characterised in that a plate (18), by means of which the bushing (19) is connected rigidly but detachably to the device for height adjustment (23 - 26), is fixed to the lower end of the bushing (19).

2. Hay-making machine according to claim 1, characterised in that the bushing (19) is sealed at its lower end by a plate (18), which is screwed rigidly, but detachably, to the height adjustment device (23 - 26).

3. Hay-making machine according to claim 1 or 2, characterised in that a feather key (33) is mounted between the bushing (19) and the rotary shaft (21) to prevent rotation.

4. Hay-making machine according to claim 1 or 2, characterised in that the bushing (19) and the rotary shaft (21) are connected non-rotatably by a profile joint.

5. Hay-making machine according to one of claims 1 to 4, characterised in that the slideway between the bushing (19) and the rotary shaft (21) is covered by a bellows-type device.

## Revendications

1. Machine de fenaison, en particulier javeleuse, qui comprend, pour les outils de travail (16), un axe de rotation central (21) orienté vers le sol et dont le cadre (5) de machine est guidé sur le sol au moyen d'un châssis (13) pourvu de roues (15), comportant, à l'intérieur de l'axe de rotation (21), un dispositif de réglage en hauteur (23-26) du cadre de machine (5), le châssis (13) comportant un manchon central (19) qui coulisse, à partir du bas, sur l'axe de rotation (21) et qui est disposé sur cet axe de façon fixe en rotation mais libérable, caractérisée en ce qu'une plaque (18) au moyen de laquelle le manchon (19) est relié de façon fixe, mais amovible, au dispositif de réglage en hauteur (23-26), est fixée à l'extrémité inférieure du manchon (19).

2. Machine de fenaison selon la revendication 1, caractérisée en ce que le manchon (19) est fermé à son extrémité inférieure par une plaque (18) qui est vissée de façon ferme, mais amovible, au dispositif de réglage en hauteur (23-26).

3. Machine de fenaison selon la revendication 1 ou 2, caractérisée en ce qu'un ressort de réglage est disposé en tant que sécurité de rotation entre le manchon (19) et l'axe de rotation (21).

4. Machine de fenaison selon la revendication 1 ou 2, caractérisée en ce que le manchon (19) et l'axe de rotation (21) sont reliés de façon fixe en rotation par une combinaison à profilés.

5. Machine de fenaison selon l'une des revendications 1 à 4, caractérisée en ce que la glissière entre le manchon (19) et l'axe de rotation (21) est recouverte par un soufflet (34).

FIG. 1

FIG. 2

FIG. 3